# EUROPÄISCHE PATENTSCHRIFT

(11) **EP 0 773 052 B1**
(45) Veröffentlichungstag und Bekanntmachung des Hinweises auf die Patenterteilung: **18.09.2002**
(21) Anmeldenummer: 96116828.3
(22) Anmeldetag: 19.10.1996
(51) Int. Cl.: B01D 29/21

(54) **Radial durchströmbares Ringfilterelement**
Radially traversed ring filter element
Elément filtrant annulaire traversé radialement

(30) Priorität: 07.11.1995 DE 19541385
(43) Veröffentlichungstag der Anmeldung: 14.05.1997
(73) Patentinhaber: MAHLE Filtersysteme GmbH, 70376 Stuttgart (DE)
(72) Erfinder: Gebert, Hans, 74080 Heilbronn (DE); Schneider, Horst, 71336 Waiblingen (DE); Waibel, Hans, 70378 Stuttgart (DE)
(74) Vertreter: Patentanwalts-Partnerschaft Rotermund + Pfusch

(56) Entgegenhaltungen:
- EP-A- 0 441 045
- EP-A- 0 548 523
- EP-A- 0 650 751
- US-A- 3 516 549

## Beschreibung

Die Erfindung betrifft ein radial durchströmbares Ringfilterelement für Flüssigkeits-, insbesondere Schmierölfilter, aus Bahnenmaterial, das insbesondere zick-zack-förmig gefaltet ist, mit einer auf die an einem Ende des Ringfilterelementes liegenden Stirnkanten des Bahnenmaterials dicht aufgebrachten Endscheibe.

Bei einem solchen aus DE 4 428 139 A1 bekannten Ringfilter besteht die betreffende Endscheibe im wesentlichen aus elastischem Material, um bei einer Anlage radial innen oder außen an einem aus Ringfilter aufnehmenden Aufnahmeteil unter elastischer Verspannung dicht anliegen zu können. Um eine ausreichende Verformungssteifigkeit zu erhalten, ist der betreffende, radial außen oder innen liegende Ringbereich der Endscheibe durch eine eingeformte Vlies-Ringscheibe verstärkt.

Hiervon ausgehend beschäftigt sich die Erfindung mit dem Problem, eine funktionell sichere und einfach herstellbare Endscheibe zu schaffen, das sie durch eine Ausführung mit sämtlichen Merkmalen des Anspruchs 1 löst.

Zweckmäßige und vorteilhafte Ausgestaltungen der Erfindung sind Gegenstand der Unteransprüche und werden anhand gezeichneter Ausführungsbeispiele noch näher erläutert werden.

Die erfindungsgemäße Festigkeitssteigerung wird durch jeweils das Einfassen der nach axial außen freien Oberfläche der mindestens einen radial innen oder außen liegenden Vliesringscheibe erreicht.

Ein Vorteil der Erfindung beruht darin, der Vliesdichtung eine gesteigerte Langzeitfestigkeit zu geben. Bei der Ausführung nach Anspruch 2 wird dies durch eine ÜbereinanderAnordnung mehrerer Vliesscheiben, die untereinander verschweißt werden, in besonders hohem Maße erreicht. Das Verschweißen erfolgt bevorzugt durch ein Ultraschall-Schweißverfahren, bei dem einzelne Vliesscheiben nur mit einer relativ geringen Dicke aufgetragen werden können. Unproblematisch ist bei einem solchen Schweißverfahren jedoch ein Auftragen mehrerer Vliesscheiben übereinander durch jeweiliges getrenntes Aufschweißen jeder der übereinander liegenden Scheiben.

Bei einem erfindungsgemäß ausgeführten Filterelement mit verstärkten Radialdichtungen aus Vlies, kann das elastische Vlies praktisch axial bündig in die Faltkanten des Filterelemente-Bahnenmaterials übergehen. Dennoch wird eine radial dichte Wirkung erzielt. Dabei ist es allerdings zweckmäßig, den Durchmesser der dichtenden Ringkante des Vlieses so zu wählen, daß bei der Anlage an eine Gegendichtfläche eine leichte elastische Verspannung gegeben ist entsprechend den Lehren nach den Ansprüchen 4 und 5.

Bei einer radial innen liegenden Dichtkante des Vliesmaterials hilft in eingebautem Zustand bei einem insbesondere Schmieröl-Filter ein Schrumpfen des Vliesmaterials unter dem Einfluß des Öls, um die Dichtwirkung zu erhöhen. Die Schrumpfwirkung wird mit zunehmender Wärme des Öls noch erhöht.

Ausführungsbeispiele der Erfindung sind in der Zeichnung dargestellt.

Es zeigen
- Fig. 1: einen Schnitt durch einen Endbereich eines Ringfilterelementes mit einer aufplastifizierten Kunststoffendscheibe mit eingeformter Vlies-Radialdichtung,
- Fig. 2: die Darstellung einer Ausführung nach Fig. 1 mit einer zweilagigen, verschweißten Vlies-Radialdichtung,
- Fig. 3 a - d: Ablauf der Herstellungsschritte für die Herstellung einer Filterelement-Endscheibe in einer Ausführung und Schnittdarstellung nach Fig. 1.

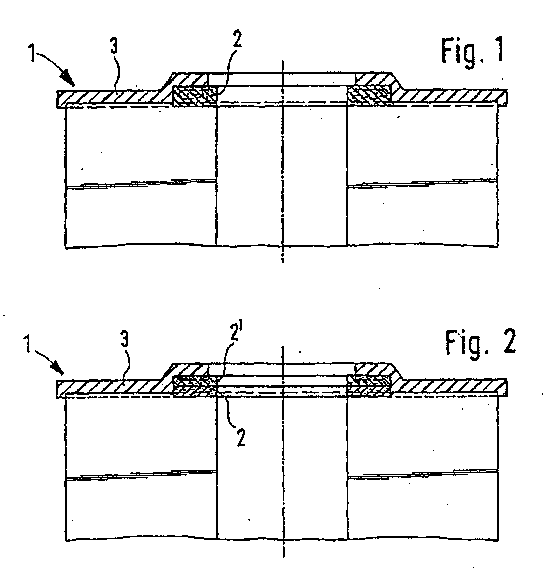

Bei der Ausführung nach Fig. 1 ist ein Ringfilter aus zick-zack-förmig gefaltetem Bahnenmaterial an seinen Stirnkanten über eine Endscheibe 1 gedichtet. Diese Endscheibe 1 besteht aus einer massiven Kunststoff-Endscheibe 3 und einer Vlies-Ringscheibe 2, die sich ausschließlich im radialen Innenbereich befindet und dort bis auf einen geringfügig radial innen überragenden Rand von der kompakten Endscheibe 3 überdeckt ist. Die Vlies-Ringscheibe 2 und die kompakte Endscheibe 3 sind jeweils dicht mit den Stirnkanten des Filter-Bahnenmaterials verbunden. Eine dichte Verbindung besteht auch zwischen der Vlies-Ringscheibe 2 und der kompakten Endscheibe 3.

Die Vlies-Ringscheibe 2 und die kompakte Endscheibe 3 sind jeweils in getrennten Ultraschall-Schweißvorgängen nacheinander aufgebracht. Die Vlies-Ringscheibe schließt radial innen praktisch bündig mit den Faltkanten des Bahnenmaterials ab, wobei der Innendurchmesser dieser Ringscheibe 2, mit dem diese Scheibe an einer Gegendichtfläche dicht anliegt, geringfügig kleiner gewählt ist als derjenige der zylindrischen Gegendichtfläche. Dadurch liegt die Vlies-Ringscheibe 2 unter leichter Vorspannung an der Gegendichtfläche an. Dies gilt auch für das Bahnenmaterial des Filterelementes., dessen Faltkanten bei bündigem Übergang zu dem Vlies ebenfalls leicht gespannt an der Gegendichtfläche zu liegen kommen.

Die elastische radiale Aufweitung der Vlies-Ringscheibe 2 kann diametral etwa 0,3 bis 1,5 % betragen. Die massive Kunststoff-Endscheibe 3 ist beispielsweise eine Polyamid-Endscheibe, die in einem sogenannten Heizspiegel-Plastifizierverfahren auf die Stirnkanten des Filterelementes sowie auf die Vliesscheibe 2 dicht aufplastifiziert wird.

Bei der Ausführung nach Fig. 2 liegen zwei Vlies-Ringscheiben 2 und 2' miteinander verschweißt zwischen den Stirnkanten des Filterelementes und der aufplastifizierten Endscheibe 3.

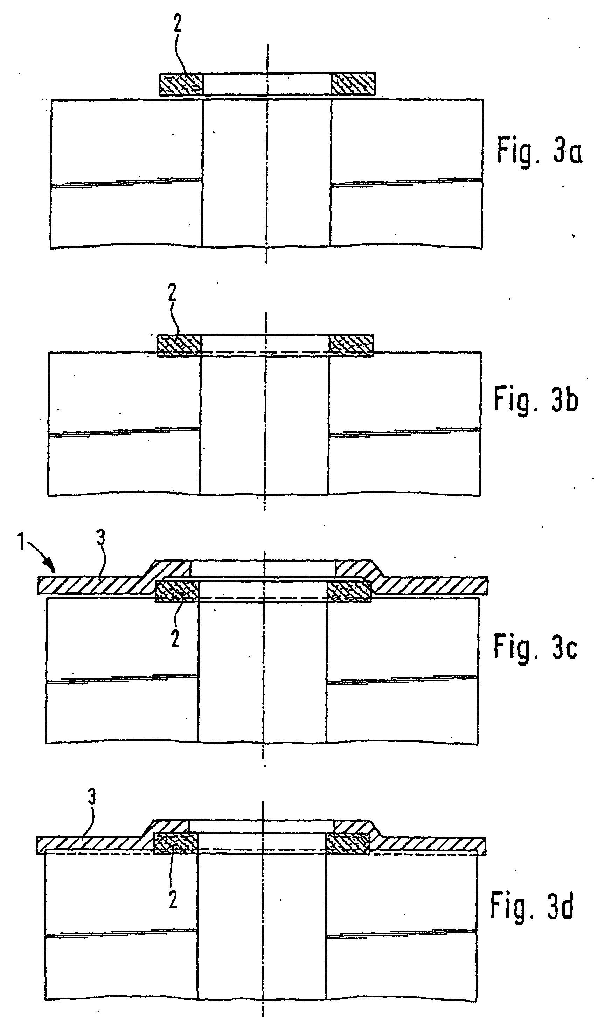

Anhand der Einzeldarstellungen in der Fig. 3 wird nachfolgend das Herstellungsverfahren für eine erfindungsgemäße Endscheibe beschrieben.

Zunächst wird entsprechend Fig. 3 a radial innen eine Vlies-Ringscheibe 2 im Ultraschall-Verfahren auf die Stirnkanten des Filterelementes radial innen etwa bündig abschließend aufgeschweißt. In einem solchen aufgeschweißten Zustand ist die Vliesscheibe 2 in Fig. 3 b dargestellt.

Bei Fig. 3 c wird eine vorgeformte Endscheibe 3 aus festem Kunststoff auf die bereits mit einer Vlies-Ringscheibe 2 versehene Stirnseite eines Filterelementes im Heizspiegel-Verfahren aufplastifiziert und zwar gleichzeitig auf die Stirnkanten des Filterelementes und auf die Vlies-Ringscheibe 2. Den Endzustand gibt Fig. 3 d wieder. Die strichpunktierten Linien in Fig. 3 d geben jeweils die Einplastifiziertiefe wieder.

Anstelle einer Vlies-Ringscheibe 2 in nur einer Lage, können bei einer Abdeckung durch eine aufplastifzierte Kunststoff-Endscheibe 3 aus kompaktem Material auch mehrlagige Vlies-Ringscheiben 2 aufgebracht werden, wobei die einzelnen Lagen dann untereinander im Ultraschall-Verfahren verschweißt sind.

## Patentansprüche

1. Radial durchströmbares Ringfilterelement für Flüssigkeits-, insbesondere Schmierolfilter, aus Bahnenmaterial, das inbesondere zick-zack-förmig gefaltet ist, mit einer nur in einem radial inneren oder äußeren Randbereich dicht auf die an einem axialen Ende des Ringfilterelementes liegenden Stirnkanten des Bahnenmaterials aufgeschweißten Vlies-Ringscheibe (2) und einer auf die Vlies-Ringscheibe und den gesamten vliesfreien Bereich der Stirnkanten aufplastifizierten Endscheibe (3) aus einem kompakten Material.

2. Ringfilterelement nach Anspruch 1,
**dadurch gekennzeichnet,**
**daß** anstelle einer einzigen Vlies-Ringscheibe (2) ein Verbund aus wenigstens zwei übereinanderliegenden Vlies-Ringscheiben (2;2') eingesetzt ist, bei dem die jeweils unterste Vlies-Ringscheibe (2) dicht auf die Stirnkanten des Bahnenmaterials und die jeweils folgende Vlies-Ringscheibe (2') auf die darunterliegende Vlies-Ringscheibe (2) aufgeschweißt ist.

3. Ringfilterelement nach Anspruch 1 oder 2,
**dadurch gekennzeichnet,**
**daß** die radial innen- bzw. außen' liegenden, dichtenden Vlieskanten bündig an die Faltkanten des Filterbahnmaterials angrenzen oder diese jeweils nur äußerst geringfügig überragen.

4. Ringfilterelement nach einem der vorhergehenden Ansprüche,
**dadurch gekennzeichnet,**
**daß** der dichtende Innen- bzw. Außendurchmesser der mindestens einen Vlies-Ringscheibe (2;2') sowie der Faltkanten des Bahnenmaterials bei bündigem Abschluß der mindestens einen Vlies-Ringscheibe (2;2') mit den Faltkanten in eingebautem Zustand des Ringfilterelementes, bei dem die mindestens eine Vlies-Ringscheibe (2;2') dichtend an der Gegenfläche des Ringfilterelementes anliegt, unter elastischer Verformung des Vliesmaterials um etwa 0,3 bis 1,5 % vergrößert bzw. verkleinert ist.

## Claims

1. A radial flow-through ring filter element for fluid filters, in particular lubrication oil filters, made of tape-like material, in particular material with concertina-like folds, with a fleece ring disk (2) seal-welded, in only a radially inner or outer peripheral area, to one of the edges of the tape-like material located at one axial end of the ring filter element and an end disk (3) of compact material, being plasticised onto the fleece ring disk and all of the fleece-free area of the end face edges.

2. The ring filter element in accordance with claim 1,
**characterised in that**,
instead of a single fleece ring disk (2), an assembly of at least two fleece ring disks (2;2'), one on top of the other, are used whereby the respective lowest fleece ring disk (2) is seal-welded to the edges of the tape-like material and the respective following fleece ring disk (2') seal-welded to the next lower fleece ring disk (2).

3. The ring filter element in accordance with claims 1 or 2,
**characterised in that**
the sealing fleece edges, located radially inside or outside, border flush with the folded edges of the filter tape material or individually project beyond them by an extremely small amount only.

4. The ring filter element in accordance with one of the previous claims,
**characterised in that**
the sealing inner or outer diameter of the at least one fleece ring disk (2;2') as well as the folded edges of the tape-like material, with at least one fleece ring disk (2;2') having a flush fit with the folded edges when the filter element is in its assembled state, i.e. while at least one fleece ring disk (2;2') forms a tight seal with the matching face of the ring filter element, is increased or decreased respectively by about 0.3 to 1.5 % as a result of the elastic deformation of the fleece material.

## Revendications

1. Elément filtrant annulaire dans lequel le passage s'effectue en direction radiale, destiné à être utilisé dans des filtres à liquide, notamment dans des filtres à huile de graissage, et fait d'un matériau en forme de bandes plus particulièrement pliées en zig-zag, qui est pourvu d'un disque annulaire en nappe (2) soudé de façon étanche uniquement dans une zone marginale intérieure ou extérieure en direction radiale sur les bords frontaux du matériau en bandes, lesdits bords frontaux étant situés à l'une des extrémités axiales de l'élément filtrant annulaire, ainsi que d'un disque d'extrémité (3) qui est fait en un matériau compact et qui est appliqué par plastification sur le disque annulaire en nappe et sur toute la zone des bords frontaux, dépourvue de nappe.

2. Elément filtrant annulaire selon la revendication 1, **caractérisé en ce que**, au lieu d'utiliser un seul disque annulaire en nappe (2), c'est un ensemble composé d'au moins deux disques annulaires superposés (2 ; 2') que l'on insère, le disque annulaire en nappe inférieur (2) étant soudé de façon étanche sur les bords frontaux du matériau en forme de bandes et le prochain disque annulaire en nappe (2') étant soudé de façon étanche sur le disque annulaire en nappe (2) sous-jacent.

3. Elément filtrant selon la revendication 1 ou 2, **caractérisé en ce que**, les bords en nappe situés à l'intérieur ou à l'extérieur en direction radiale et assurant l'étanchéité affleurent les bords de pliage du matériau en forme de bandes du filtre ou ne les dépassent que très légèrement.

4. Elément filtrant selon l'une des revendications précédentes, **caractérisé en ce que**, une fois l'élément filtrant inséré, le ou les disque(s) annulaire(s) en nappe (2 ; 2') reposant contre la surface opposée de l'élément filtrant annulaire de manière à assurer l'étanchéité, et le ou les disque(s) annulaire(s) en nappe (2 ; 2') affleurant les bords de pliage, le diamètre intérieur ou extérieur assurant l'étanchéité du ou des disque(s) annulaire(s) en nappe (2; 2') ainsi que des bords de pliage du matériau en forme de bandes est augmenté ou réduit d'environ 0,3 à 1,5 % par déformation élastique de la nappe.
